# EUROPEAN PATENT APPLICATION

(11) **EP 0 817 490 A2**
(43) Date of publication of application: **07.01.1998**
(21) Application number: 97304798.8
(22) Date of filing: 02.07.1997
(51) Int. Cl.: H04N 7/173

(54) **Input command control system and method of operation**

(30) Priority: 04.07.1996 JP 174499/96
(71) Applicant: NEC CORPORATION, Tokyo (JP)
(72) Inventor: Hasegawa, Satoshi, Minato-ku, Tokyo (JP)
(74) Representative: Orchard, Oliver John

(57) **Abstract**

In a multi-media communication terminal device, when commands of respective reproduction modes are sequentially input for a short period, synchronization error of the image and sound causing disturbance of image of sound and unwanted video and audio output, can be avoided. When the command is input to the multi-media communicating terminal device by a user, a control software executed in CPU inhibits input of the next command. When a video data corresponding to the input command is fed to the multi-media communication terminal device from the superior device, decoding of the video data in the video data decoding portion is initiated.
When decoding of the new video data by the video data decoding portion is confirmed, interruption is caused in CPU. When interruption is confirmed, the control software permits next command input which is once inhibited.

## Description

The present invention relates to an input command control system and to a method of operation thereof. There will be described below, by way of example in illustration of the invention, the application of the system to a multi-media communication terminal device which reproduces entertainment or educational software transmitted through a communication line. More specifically, the illustrative example to be described below relates to a command input control system and to a method of operation thereof which provides control in the case in which commands of respective reproduction modes are sequentially input within a short period by a user.

Currently, a television service known as a VOD (Video On Demand) service using a communication line, such as a television cable (CATV) is in development. In a VOD service such as that proposed in the specification of Japanese Unexamined Patent Publication (Kokai) No. Heisei 4-324784, one end of a transmission line is connected to a recording medium or to a recording apparatus supplying and controlling the supply of multi-media data and known as a head end apparatus, and the other end of the transmission line is connected to one or more multi-media communication terminal devices, known as set top boxes (STB), and one of which is employed at each subscriber terminal. An STB is employed with a television set or television receiver having a display and an interface designed to receive the VOD service. Currently, such a system is being developed by a number of developers.

In such a multi-media communication system employing a communication network, when a command is input only as an interrupt signal for the multi-media communication terminal device from a superior system, it becomes necessary to avoid any drop out and disturbance of the video and sound data which are being currently reproduced. Therefore, in the specification of Japanese Unexamined Patent Publication No. Showa 63-209243 it has been proposed that the multi-media data which is currently being reproduced from the superior system should be caused to pause, that subsequently, upon the termination of the interrupt process, the pause mode should be released, and that then the transmission of the multi-media data should be initiated again.

On the other hand, when a command for the apparatus to be in the reproduction mode is input to the multi-media communication terminal device by the subscriber, it becomes necessary to avoid the disturbance of the video image which may be associated with the switching to the new reproduction mode. Particularly when the reproduction speed is lower than that for reproduction at the normal speed, such as for slow reproduction in a field search, the possibility of causing such disturbance is increased. As a solution to this problem, it may be possible to control the amount of the multi-media data transmitted from the superior device and to transmit a predetermined amount of data at every occurrence of a demand for data transmission from the multi-media communication terminal device.

In a proposed multi-media communication service using a communication line, if the commands relating to the reproducing condition of the multi-media data are sequentially input by the user, it is possible that a disturbance may be caused in the reproduced video image of audio sound, or for an image or sound to be output in a way that is not intended. Also, when the synchronization process for the video image and the audio sound is included in the command process relating to the reproduction state, and input by the user, an error in the synchronization of both the video image and the audio sound is likely to be caused.

Therefore, it becomes necessary to provide a command control in such a way as not to cause any disturbance in the video image or in the audio sound, even when the commands are sequentially input within a short period.

A feature of a command control to be described below, by way of example in illustration of the invention is that it is able to suppress a disturbance of a video image and/or of audio sound, even when the commands are sequentially input within a short period.

A particular input command control system to be described below, by way of example in illustration of the invention for controlling an input command designating a reproduction mode of video data transmitted from a centre to a terminal device via a communication line, includes command input inhibiting means for inhibiting the input of a second command until video data corresponding to a first input command is supplied from the centre when the input commands are input sequentially.

Preferably, the command input inhibiting means includes means for transmitting a command demanding the interruption of the video data on transmission from a current centre. In such a case, the command input inhibiting means may include means for demanding the transmission of the video data corresponding to the first input command to the centre after receiving a response to the command demanding the interruption of the transmission.

The data transmitted from the centre via the communication line may include audio data, and the command input inhibiting means may include means for designating a process for establishing the synchronization of newly transmitted video data and audio data with respect to the hardware of an external signal processing system, and means for interrupting the transmission of the currently transmitted data from the centre, subsequently transmitting a start demand to the centre.

The command input inhibiting means may be application software. The means for designating the process for establishing the synchronization of the video and the audio data in the newly transmitted data with respect to the hardware of the external signal processing system, may be device driver software.

An input command control method to be described below, by way of example in illustration of the invention, for controlling an input command designating a reproduction mode of video data transmitted from a centre to a terminal device via a communication line, includes the step of inhibiting the input of a second command until a video data corresponding to a first input command is supplied from the centre when the input commands are input sequentially.

A multi-media communication terminal device to be described below, by way of example in illustration of the invention, for receiving multi-media data, including a video data component and an audio data component, from a data source through a communication network, includes a data input connected to the data source via the communication network for receiving the multi-media data from the data source, a data processing system for processing the multi-media data for reproducing video data contained in the video data component and audio data contained in the audio data component, a user interface permitting a user interactively to input a command for making a selection among a plurality of operation modes, the user interface including command input inhibiting means for inhibiting the input of a second command until video data corresponding to a first input command is supplied from the centre when the input commands are sequentially input, and a data output connected to a video output device for visually reproducing the video data and to an audio output device for audibly reproducing the audio data.

The following description and drawings disclose, by means of examples, the invention which is characterised in the appended claims, whose terms determine the extent of the protection conferred hereby.

In the drawings:
Fig. 1 is a block schematic diagram illustrating connections to a multi-media communication terminal device,
Fig. 2 is a block schematic circuit diagram of the multi-media communication terminal device,
Fig. 3 is a block schematic diagram illustrating the arrangement of control software to be executed by a CPU,
Fig. 4 is a chart showing the sequence of operations in one multi-media communication terminal device, and
Fig. 5 is a chart showing the sequence of operations in another multi-media communication terminal device.

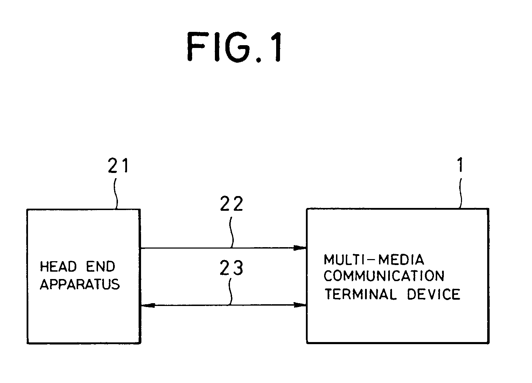

Referring to Fig. 1, there is shown a multi-media communication terminal device and a system utilizing a communication line, such as a cable television (CATV) system. In Fig. 1, a multi-media communication terminal device 1 is shown connected to a head end apparatus 21 which is a recording medium, such as a recording apparatus or the like which provides the supply of multi-media data and the control of the multi-media data supply, via a transmission line 22 for transmitting the multi-media data and a control line 23 which enables the transfer of a control signal to take place.

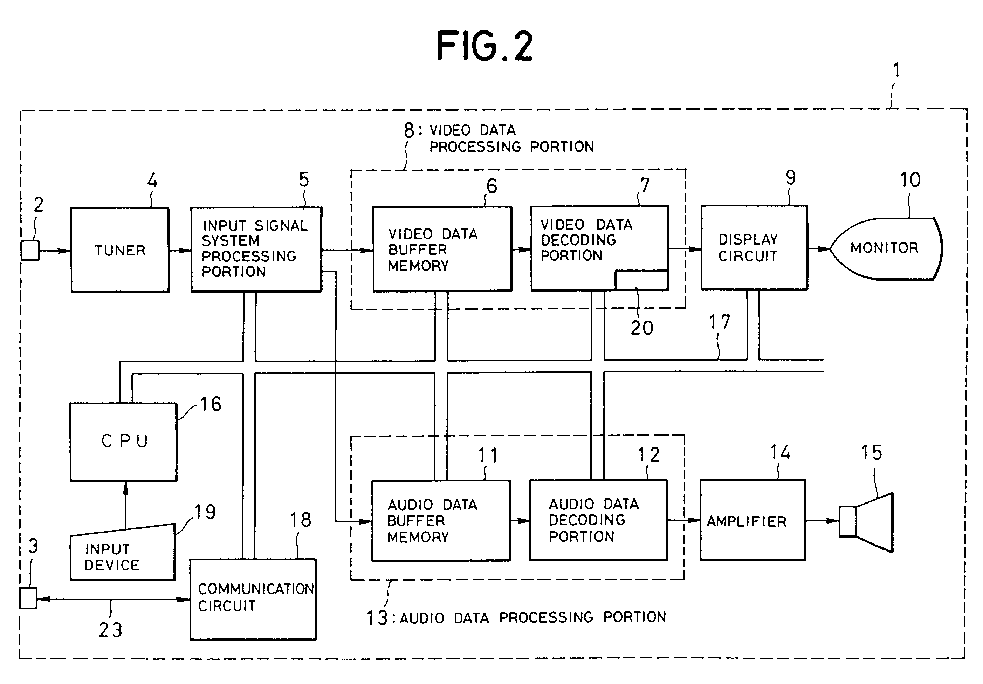

Referring to Fig. 2, the multi-media communication device 1 is shown to include an input end 2 for receiving the input of the multi-media data transferred from the head end apparatus 21 via the transmission line 22, a tuner 4 for selecting a desired channel from among a plurality of channels, an input signal system for processing a portion 5 separating the input multi-media data into a video data, audio data and other data, a video data processing portion 8 for carrying out the decoding process for the video data from the input signal system processing portion 5, a monitor 10 for displaying the decoded video data, a display circuit 9 for use in providing the display of the decoded video data on the monitor 10, an audio data processing portion 13 for decoding the audio data from the input signal system processing portion 5, a speaker 15 for reproducing audio sound from the decoded audio data, an amplifier circuit 14 for amplifying the signal containing the decoded audio data for reproduction by the speaker 15, a CPU 16 for controlling the operation of the respective modules under the control of a program, a bus 17 for transmitting the operating control signals from the CPU 16, an input device 19, such as a keyboard or the like, a communication circuit 18 for transmitting and receiving the control signal between the head end apparatus 21 via the control signal line 23, and a control input/output terminal 3 connected to the control signal line 23.

The video data processing portion 8 includes a video data buffer memory 6 temporarily storing the video data separated from the input signal system processing portion 5, and a video data decoding portion 7 for use in the process for decoding the video data. The video data decoding portion 7 includes a decode counter 20 which increments a count by one every time that one image (one picture) is decoded. The count of the decode counter 20 can be made reference to by software executed by the CPU 16.

The audio data processing portion 13 includes an audio data buffer RAM 11 temporarily storing the video data separated by the input signal system processing portion 5, and an audio data decoding portion 12 which carries out the decoding process for the audio data.

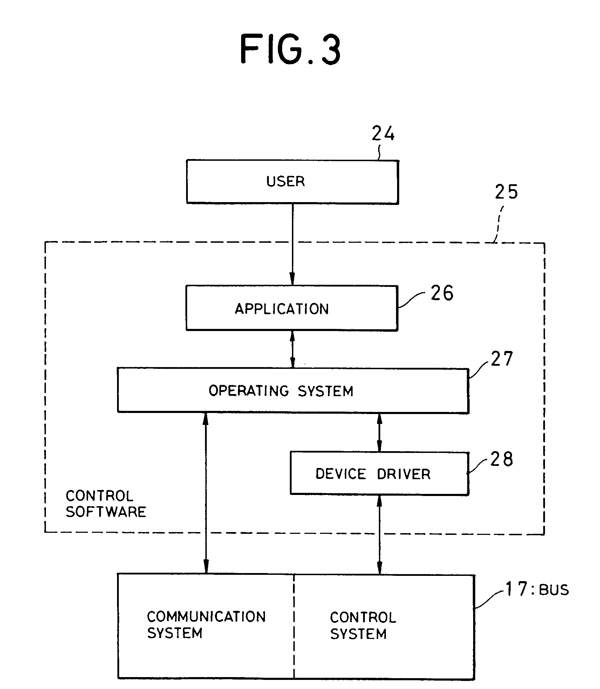

Fig. 3 is a block schematic diagram for use in illustrating the control software executed by the CPU 16 in the multi-media communication terminal device. Referring to Fig. 3, the control software 25 includes application software 26 and a device driver 28 executable on an operating system 27.

The application software 26 receives operational information from a user 24 of the multi-media communication terminal device 1, and provides information about the device driver 28 or a message to the bus 17 of the communication system.

The device driver 28 provides a command for the hardware of a respective signal processing system via the bus 17 of the control system on the basis of the information provided from the application software 26 via the operating system 27. On the other hand, the device driver 28 obtains information from the hardware of a respective signal processing system via the bus 17, in order that the process in the device driver 28 can be carried out on the basis of the information and in order to provide information to the application software 26.

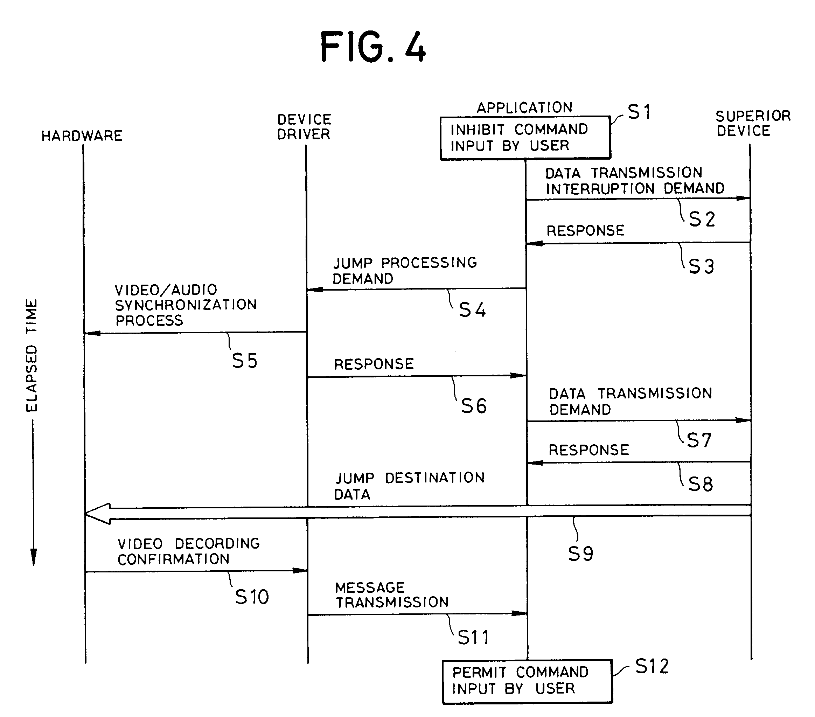

Next, when a jump reproduction is performed by the multi-media communication terminal device 1, the operation of the embodiment shown, in the case in which commands demanding jump reproduction are sequentially input by the user of the multi-media communication terminal device 1, will be discussed with reference to Figs. 1, 2, 3 and 4. Fig. 4 is a sequence chart for illustrating the operation of the embodiment of the multi-media communication terminal device shown at 1.

Assuming that normal reproduction is currently being carried-out, if the jump reproduction demanding command is input to the application software 26 via the input device 19 by the user 24 of the multi-media communication terminal device 1, the application software 26 feeds a request for the stopping of the transmission of the currently transmitted data to the head end apparatus 21 as the superior device (S1), under the condition in which the command input by the user is inhibited (S2).

When a response is returned to the application software 26 from the head end apparatus 21 (S3), the application software 26 issues a jump processing demand (S4) for carrying out a jump process with the hardware of the signal processing system to the device driver 28. Then, the device driver 28 issues a command for the processing of the synchronization of the video and audio data (S5) in the newly transmitted data with respect to the hardware of the signal processing system.

Here, it is assumed that the steps are taken to clear the most recently stored data in the buffer memories 6 and 11 present in the multi-media communication terminal device 1, and to decode the header added for every given unit of the newly transmitted data to establish synchronization at a time when the code indicative of a start of one data is detected, when synchronization is to be established between video and audio of the multi-media data transmitted at a constant rate.

When a response is received (S6), upon the completion of the synchronization process of the video and audio, from the device driver 28, the application software 26 issues a transmission demand concerning the transmission of a jump destination data for the head end apparatus 21 as the superior device (S7).

It has been proposed previously that, at a time when the application software 26 receives the response for the jump destination data demand from the head end apparatus 21, a command input from the user should be permitted. In this connection, it may possibly occur that the application software will permit the next command to be input before the jump designation data reaches the multi-media communication terminal device 1. Accordingly, it is possible that the data has already been transmitted from the head end apparatus 21 and that it will be present on the transmission line. In such a case, an error can occur between the data transmission timing and video/audio synchronization process timing to cause a synchronization error between the video and the audio and to cause a deterioration in the display of for example an unnecessary image, or in the disturbance of the image. The occurrence of this problem can be rendered less likely by carrying out the subsequent process without permitting a command input to be received from the user at this stage.

If the jump destination data from the head end apparatus 21 reaches the multi-media communication terminal device 1 via the transmission line 22 (S9) after the receipt of the response to the jump destination data demand from the head end apparatus 21 (S8), the decoding of the image is initiated by the video data decoding portion 7.

When the decoding of the new image is detected by the video data decoding portion 7 (S10), the interruption of the CPU 16 is triggered. Upon an interruption being detected by the device driver 28 in the control software 25, the device driver 28 transfers a message providing notification to the application software 26 (S11) that the new image has been decoded. The application software 26 is then responsive to this message to permit the command which has been inhibited to be input again from the user.

Since the next command will not be received until the jump process has been completed and the decoding process of the image for they command has been carried out by the process set forth above, an input command control which will not cause any disturbance of the image can be carried out on the side of the multi media communication terminal device with respect to the sequential command input.

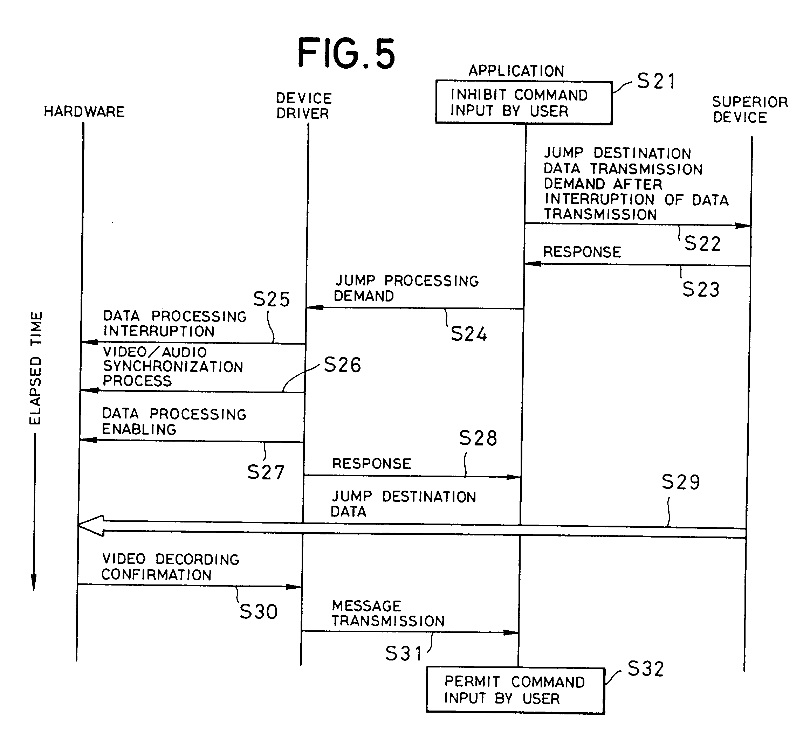

On the other hand, in the embodiment described above, there has been a discussion of the case in which there has been an interruption of the transmission of currently transmitted data for the head end apparatus as the superior device, in order to carry out the synchronization process of the video and audio reproduction in the particular embodiment. However, it is also possible to carry out the synchronization of the video and audio by interrupting the processing of the data from the head end apparatus 21. An alternative embodiment implementing this latter process will be discussed hereinafter with reference to Figs. 1, 2, 3 and 5.

Assuming that normal reproduction is currently in process, when a jump reproduction demand command is input to the application software 26 via the input device 19 by the user 24 of the multi-media communication terminal device 1, the application software 26 interrupts the transmission of the currently transmitted data from the head end apparatus 21 as the superior device, under the condition in which a command input by the user is inhibited (S21). Subsequently, the transmission start demand is transmitted after the search of the data of the jump destination (S22).

When the response is returned to the application software 26 from the head end apparatus 21 (S23), the application software 26 carries out the jump processing demand in order that the jump process shall be performed by the hardware of the signal processing system for the device driver 28 (S24).

The device driver 28 commands the interruption of the separation process of the video data and the audio data of the input multi-media data with respect to the input signal system processing portion 5 (S25). Then, a command is given for the signal processing hardware to carry out the process of establishing the synchronization of the video and audio data in the newly transmitted data (S26). After the completion of the process of the synchronization video and audio data, the command is given for again initiating the separation process of the video data and the audio data of the input multi-media data (S27). The device driver 28 then sends back a response to the application software 26 (S28).

In the embodiment shown, during a search period, in which a search for the jump designation data is carried out by the head end apparatus 21, as the superior device, the synchronization of video and audio data is established in the multi-media communication terminal device 1. Accordingly, after the process of the synchronization of the video and audio data, the jump destination data is transmitted from the head end apparatus 21.

In a previously proposed arrangement, the command which is input by the user is permitted to take place at the time of receipt of the response with respect to the jump processing demand to the device driver 28 of the application software 26. When a jump command is then sequentially input by the user, an error may be caused between the timing of the jump destination data which is transmitted from the head end apparatus 21 and the timing of an internal process in the multi-media communication terminal device 1 with respect to the input command, thereby causing the problem that the video and audio output corresponding to the demand by the user cannot be carried out. This problem is rendered less likely to occur by not permitting the command to be input from the user, and the problem in the subsequent process can be avoided.

After the application software 26 receives the response to the jump processing demand from the device driver 28 (S28), the jump destination data from the head end apparatus 21 reaches the multi-media communication terminal device 1 through the transmission line 22 (S29). Then, decoding of the image by the video data decoding portion 7 is initiated.

Once decoding of the new image in the video data decoding portion 7 is detected (S30), an interruption is caused by CPU 16.

When the interruption of the process is confirmed by the device driver 28 in the control software, the device driver 28 transfers the message giving notification that the new image is decoded with respect to the application 26 (S31). The application then again permits acceptance of the command which is input from the user in response to this message (S32).

As set forth above, even in the embodiment shown, since the next command will not be accepted until the jump process has been completed and the decoding process of the image for the jump command has been carried out, the control of the command which has been input at the multi-media communication terminal device side becomes possible.

While the two embodiments have been discussed in terms of the sequential input of the jump command, it is possible to employ the procedure not only to the jump command but also to adapt it to a sequential input in some other reproduction mode, or to a sequential input in a plurality of reproduction modes.

As described above, when a sequential input is made by the user, the next reproduction command from the user is not accepted upon the completion of the reception process of the currently received reproduction command, and instead, the next input command is accepted only after the confirmation of the interruption of the CPU process, due to the initiation of the multi-media data, particularly the video data, from the superior device.

Also, when the synchronization process for video and audio data is required, the data demanded by the user can certainly be received from the superior device. Accordingly, it is possible to avoid an error being caused between the data transmission timing from the superior device and the video/audio synchronization process timing in the multi-media communication terminal device resulting in an unwanted disturbance of the image or so forth. Also, the problem can be avoided that the video and audio data output demanded by the user cannot be made.

Furthermore, since the operation in the overall multi-media communication system is rendered more stable, the reliability of the system for the user can be significantly improved.

Although particular arrangements illustrative of the invention have been described by way of example, it will be understood that variations and modifications thereof, as well as other embodiments may be made within the scope of the protection sought by the appended claims.

## Claims

1. An input command control system for controlling an input command designating the reproduction mode of data transmitted from a centre to a terminal device via a communication line, including input command inhibiting means for inhibiting the input of a second command until data corresponding to a first input command is supplied from the centre when the input commands are sequentially input.

2. An input command control system as claimed in claim 1, wherein the input command inhibiting means includes means for transmitting a command demanding the interruption of the data on transmission from a current centre.

3. An input command control system as claimed in claim 2, wherein the input command inhibiting means includes means for demanding the transmission of the data corresponding to the first input command to the centre after, the receipt of a response to the command demanding the interruption of a transmission.

4. An input command control system as claimed in claim 1, wherein the data transmitted from the centre via the communication line includes video and audio data, and the input command inhibiting means includes means for designating a process for establishing the synchronization of newly transmitted video data and audio data with respect to the hardware of an external signal processing system.

5. An input command control system as claimed in claim 1, wherein the input command inhibiting means includes means for interrupting the transmission of currently transmitted data from the centre, and subsequently transmitting a start demand to the centre.

6. An input command control system as claimed in claim 1, wherein the input command inhibiting means is constituted by application software.

7. An input command control system as claimed in claim 4 wherein the means for designating the process for establishing the synchronization of the video data and the audio data in the newly transmitted data with respect to the hardware of the external signal processing system is device driver software.

8. An input command control method for controlling an input command designating a reproduction mode of data transmitted from a centre to a terminal device via a communication line, including the steps of inhibiting the input of a second command until data corresponding to a first input command has been supplied from the centre when the input commands are sequentially input.

9. An input command control method as claimed in claim 8, wherein the input command inhibiting step includes transmitting a command demanding the interruption of the data on transmission from the centre.

10. An input command control method as claimed in claim 9, wherein the input command inhibiting step includes demanding the transmission to the centre of the data corresponding to the first input command after the receipt of a response to the command demanding the interruption of transmission.

11. An input command control method as claimed in claim 8, wherein the data transmitted from the centre via the communication line includes video and audio data, and the input command inhibiting step includes the step of designating a process for establishing the synchronization of newly transmitted video data and audio data with respect to the hardware of an external signal processing system.

12. An input command control method as claimed in claim 8, wherein the input command inhibiting step includes interrupting the transmission of currently transmitted data from the centre, and subsequently, transmitting a start demand to the centre.

13. A multi-media communication terminal device for receiving multi-media data, including a video data component and an audio data component, from a data source through a communication network, including a data input connected to the data source via the communication network and receiving the multi-media data from the data source, a data processing system for processing the multi-media data for reproducing video data contained in the video data component and audio data contained in the audio data component, a user interface permitting a user to input a command interactively for making a selection among a plurality of operational modes, the user interface including input command inhibiting means for inhibiting the input of a second command until video data corresponding to a first input command is supplied from the centre when the input commands are sequentially input, and a data output connected to a video output device for visually reproducing the video data and an audio output device for audibly reproducing the audio data.

14. A multi-media communication terminal device as claimed in claim 13, wherein the input command inhibiting means includes means for transmitting a command demanding the interruption of the video data on transmission from a current data source.

15. A multi-media communication terminal device as claimed in claim 14, wherein the input command inhibiting means includes means for demanding the transmission of the video data corresponding to the first input command to the data source after the receipt of a response to the command demanding the interruption of transmission.

16. A multi-media communication terminal device as claimed in claim 15, wherein the data transmitted from the data source via the communication line includes audio data, and the input command inhibiting means includes means for designating a process for establishing the synchronization of newly transmitted video data and audio data with respect to the hardware of an external signal processing system.

17. A multi-media communication terminal device as claimed in any one of claims 13 to 16, wherein the input command inhibiting means includes means for interrupting the transmission of currently transmitted data from the data source, and subsequently transmitting a start demand to the centre.

18. A multi-media communication terminal device as claimed in claim 13, wherein the command input inhibiting means is application software.

19. A multi-media communication terminal device as claimed in claim 16, wherein the means for designating the process for establishing the synchronization of the video data and the audio data in the newly transmitted data with respect to the hardware of the external signal processing system, is a device driver software.
